(19) Europäisches Patentamt / European Patent Office / Office européen des brevets

(11) **EP 1 526 907 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(21) Anmeldenummer: **03784097.2**

(22) Anmeldetag: **29.07.2003**

(51) Int Cl.:
**B01D 15/08** *(2006.01)*

(86) Internationale Anmeldenummer:
**PCT/EP2003/008347**

(87) Internationale Veröffentlichungsnummer:
**WO 2004/014511 (19.02.2004 Gazette 2004/08)**

(54) **VERFAHREN UND VORRICHTUNG ZUR CHROMATOGRAPHISCHEN TRENNUNG VON KOMPONENTEN**

METHOD AND DEVICE FOR CHROMATOGRAPHIC COMPONENT SEPARATION

PROCEDE ET DISPOSITIF DE SEPARATION DE COMPOSANTS PAR CHROMATOGRAPHIE

(84) Benannte Vertragsstaaten:
**AT BE BG CH CY CZ DE DK EE ES FI FR GB GR HU IE IT LI LU MC NL PT RO SE SI SK TR**

(30) Priorität: **02.08.2002 DE 10235385**

(43) Veröffentlichungstag der Anmeldung:
**04.05.2005 Patentblatt 2005/18**

(73) Patentinhaber: **Max-Planck-Gesellschaft zur Förderung
der Wissenschaften e.V.
80539 München (DE)**

(72) Erfinder:
• **SCHRAMM, Henning
60598 Frankfurt (DE)**
• **KIENLE, Achim, Prof., Dr.
39108 Magdeburg (DE)**
• **KASPEREIT, Malte
06688 Wengelsdorf (DE)**
• **SEIDEL-MORGENSTERN, Andreas, Prof., Dr.
39114 Magdeburg (DE)**

(74) Vertreter: **Hannke, Christian
Hannke Bittner & Partner
Patent- und Rechtsanwalte
Ägidienplatz 7
93047 Regensburg (DE)**

(56) Entgegenhaltungen:
**US-A- 5 156 736**

• **BIRESSI G ET AL: "Experimental investigation of the behavior of gas phase simulated moving beds" JOURNAL OF CHROMATOGRAPHY A, ELSEVIER SCIENCE, NL, Bd. 957, Nr. 2, 31. Mai 2002 (2002-05-31), Seiten 211-225, XP004355406 ISSN: 0021-9673**
• **MAZZOTTI M ET AL: "Optimal operation of simulated moving bed units for nonlinear chromatographic separations" JOURNAL OF CHROMATOGRAPHY A, ELSEVIER SCIENCE, NL, Bd. 769, Nr. 1, 2. Mai 1997 (1997-05-02), Seiten 3-24, XP004064202 ISSN: 0021-9673**

## Beschreibung

Die Erfindung betrifft ein Verfahren und eine Vorrichtung zur chromatographischen Trennung von Komponenten einer Mehrkomponentenfluidmischung mittels des Simulated Moving Bed-Verfahrens gemäß den Oberbegriffen der Patentansprüche 1 und 14.

Derartige Verfahren werden insbesondere in der pharmazeutischen und chemischen Industrie dazu verwendet, Komponenten eines Stoffgemisches mit hohem Reinheitsgrad auch dann zu trennen, wenn es sich bei dem Stoffgemisch um eine komplexe Mehrkomponentenfluidmischung handelt, deren Komponenten eventuell zusätzlich eine Temperatursensibilität aufweisen. Hierbei wird die unterschiedliche Affinität der zu trennenden Komponenten gegenüber einem Feststoff (vorzugsweise Adsorbensmaterial) für deren Trennung ausgenutzt.

Herkömmlicherweise werden chromatographische Trennungen in Batch-Verfahren durchgeführt. Bei derartigen Batch-Verfahren wird eine mit dem Feststoff gefüllte Kammer (Trennsäule) von einem Lösemittel (Eluent) durchströmt. In diesem Lösemittelstrom wird eine begrenzte Menge der Mehrkomponentenfluidmischung injiziert und durchläuft die Trennsäule. Aufgrund der unterschiedlich starken Affinität der zu trennenden Komponenten zu dem Feststoff findet eine unterschiedlich starke Wechselwirkung mit dem Feststoff statt. Demzufolge wandern die zu trennenden Komponenten mit unterschiedlichen Wandergeschwindigkeiten durch die Trennsäule hindurch und verlassen die Trennsäule zu unterschiedlichen Zeitpunkten. Um eine bestimmungsgemäße Trennung der zu trennenden Komponenten zu erreichen, muß die Mehrkomponentenfluidmischung in zeitlichen Abständen der Trennsäule zugeführt werden, woraus sich eine diskontinuierliche Betriebsweise einer bei dem Batch-Verfahren verwendeten Vorrichtung ergibt.

Für eine kontinuierliche Betriebsweise wird ein Gegenstrom zwischen der das Lösemittel beinhaltenden flüssigen Phase und der festen Phase erzeugt. Hierfür wird die feste Phase entgegen der Fließrichtung des Lösemittelstroms bewegt.

Bei der kontinuierlichen Betriebsweise kann die Mehrkomponentenfluidmischung kontinuierlich in der Mitte der Trennsäule aufgebracht werden, wobei - bei geeigneter Wahl der Stromverhältnisse der festen zu der flüssigen Phase - sich stärker adsorbierte Komponenten mit dem Feststoff in Richtung eines aus der Trennsäule abgeleiteten Extraktstroms und schwächer adsorbierte Komponenten mit dem Lösemittelstrom in Richtung eines aus der Trennsäule abgeleiteten Raffinatstroms bewegen.

Die Trennverfahren können in kontinuierlicher Betriebsweise zur Steigerung der Produktivität nach dem True Moving Bed (TMB)-Verfahren betrieben werden. Derartige TMB-Verfahren werden auf Vorrichtungen angewendet, die sich in der Regel aus vier, einen Kreislauf bildenden Trennzonen zusammensetzen, welche aus mindestens einer Kammer oder einem Kammerabschnitt bestehen. In jeder Trennzone besteht ein echter Gegenstrom zwischen fester und fluider Phase. Zwischen den Trennzonen sind zwei Eingänge für die Mehrkomponentenfluidmischung und das Lösemittel und zwei Ausgänge für den Extraktstrom und den Raffinatstrom angeordnet. Die Trennung der Komponenten findet weitestgehend in zwei der vier Zonen statt, wohingegen die zwei weiteren Zonen zur Regeneration des sich bewegenden Feststoffes und des Lösemittels dienen.

In dem bekannten Simulated Moving Bed (SMB)-Verfahren werden Probleme im Zusammenhang mit der Bewegung und der Regeneration des in den einzelnen Kammern angeordneten Feststoffes gemäß dem TMB-Verfahren vermieden. Hierfür ist eine Mehrzahl von Kammern oder Kammerabschnitten mit jeweils stationär angeordnetem Feststoff in einem Kreislauf reihenartig miteinander verbunden. Die Bewegung des Feststoffes wird durch zyklisches Versetzen (Neupositionieren) von Anschlussstellen der Ein- und Ausgänge um jeweils eine Kammer bzw. einen Kammerabschnitt in Richtung des Kreislaufs simuliert. Die Zeit zwischen zwei aufeinanderfolgenden Vorgängen einer derartigen Neupositionierung (Umschaltvorgänge) wird als Takteinheit bezeichnet.

US 2 985 589 beschreibt ein derartiges SMB-Verfahren zur kontinuierlichen chromatographischen Trennung von Mehrkomponentenfluidmischungen mit einem festen, den Feststoff enthaltenden Adsorbensbett und neu positionierbaren Ein- und Ausgängen.

US 4 293 346 beschreibt die Trennung von Sacchariden aus einer wässrigen Lösung mit Ionentauscherharzen mittels des SMB-Verfahrens. Das SMB-Verfahren wird hierbei mit einer Rückstromzone zur Durchführung einer Dekompression des Ionentauscherharzes verwendet.

Die in US 2 985 589 und US 4 293 346 beschriebenen SMB-Verfahren werden mit konstanten Betriebsparametern, wie die zu- und abgeführten Volumenströme, Zeitdauer einer Takteinheit und die Konzentrationen der zugeführten Mehrkomponentenfluidmischung und des Lösemittels, betrieben.

Zur Optimierung der Produktivität der das SMB-Verfahren anwendenden Vorrichtungen schlägt US 5 122 275 und US 5 102 553 eine Veränderung der zu- und/oder abgeführten Volumenströme während jeder Takteinheit vor.

US 5 122 275 betrifft die Aufteilung jeder Takteinheit in eine aktive und eine passive Periode, wobei zu- und abgeführte Volumenströme nur während der ersten, aktiven Periode eingespeist bzw. abgeleitet werden. Auf diese Weise wird eine optimalere Ausnutzung der Produktivität der das SMB-Verfahren anwendenden Vorrichtung erreicht.

US 5 102 553 beschreibt ein SMB-Verfahren, bei dem die zu- und abgeführten Volumenströme von der Mehrkomponentenfluidmischung, dem Lösemittel, dem Extraktstrom, dem Raffinatstrom und die kreislaufinternen Zirkulationsströme zeitveränderlich innerhalb einer Takteinheit gestaltet werden. Durch das SMB-Verfahren mit derartigen zeitveränderlichen Volumenströmen kann eine Erhöhung der Produktivität gegenüber SMB-Verfahren mit konstanten Betriebsparametern erreicht werden.

Alternativ zu der Veränderung von Volumenströmen innerhalb einer Takteinheit wird in O. Ludemann-Hombourger, R.M. Nicoud und M. Bailly. The "VARICOL" Process: A New Multicolumn Continuous Chromatographic Process. Separation Science and Technology, 35(12): 1829-1862, 2000, ein asynchrones Umschalten der Zu- und Abläufe vorgeschlagen.

Im Gegensatz zum konventionellen SMB-Verfahren werden bei dem dort vorgeschlagenen SMB-Verfahren die Anschlussstellen der Ein- und Ausgänge zu verschiedenen Zeitpunkten umgeschaltet bzw. neu positioniert, so dass sich variable Trennzonenlängen pro Zeiteinheit ergeben. Auf diese Weise wird eine Erhöhung der Produktivität der das SMB-Verfahren anwendenden Vorrichtung erreicht. Ein derartiges SMB-Verfahren ist als VARICOL-Verfahren bekannt.

Alternativ wird zur Erhöhung der Produktivität der das SMB-Verfahren anwendenden Vorrichtung in US 5 422 007 vorgeschlagen, in den einzelnen Trennzonen der Vorrichtung unterschiedliche Druckwerte und/oder Temperaturwerte zur Veränderung der Adsorptionsstärke des Lösemittels anzulegen.

Die beschriebenen SMB-Verfahren mit variierenden Volumenströmen, asynchronen Schaltvorgängen und Lösemittelgradienten erlauben eine Durchsatzsteigerung (Produktivität) der das SMB-Verfahren anwendenden Vorrichtung. Derartige Vorrichtungen weisen einen relativ komplexen Aufbau und hohe Herstellungs- und/oder Betriebskosten auf. Ein Nachteil der Verfahren mit variierenden Volumenströmen ist die wachsende Beanspruchung erforderlicher Förderaggregate und die damit verbundene hohe Störanfälligkeit. Ein Nachteil der asynchronen Schaltstrategien ist die Notwendigkeit der Implementierung aufwendiger Schaltalgorithmen. Die Auslegung eines Verfahrens mit Lösemittelgradienten erfordert die Kenntnis von schwer zugänglichen thermodynamischen Daten.

Demzufolge liegt der vorliegenden Erfindung die Aufgabe zugrunde, ein Verfahren zur chromatographischen Trennung von Komponenten einer Mehrkomponentenfluidmischung mittels des Simulated Moving Bed-Verfahrens zur Verfügung zu stellen, welches die obengenannten Nachteile vermeidet und eine Erhöhung der Produktivität einer das SMB-Verfahren nutzenden Vorrichtung und eine Senkung der Betriebskosten in Ergänzung oder als Alternative zu dem herkömmlichen Verfahren erlaubt. Desweiteren ist es Aufgabe der Erfindung, eine Vorrichtung zur Durchführung des Verfahrens zur Verfügung zu stellen.

Die Aufgabe wird erfindungsgemäß durch ein Verfahren mit den Merkmalen des Patentanspruches 1 und eine Vorrichtung mit den Merkmalen des Patentanspruches 14 gelöst.

Ein wesentlicher Punkt der Erfindung liegt darin, dass erfindungsgemäß bei einem Verfahren zur chromatographischen Trennung von Komponenten einer Mehrkomponentenfluidmischung mittels des Simulated Moving Bed-Verfahrens die Konzentration der zugeführten Mehrkomponentenfluidmischung und/oder des Lösemittels innerhalb einer Takteinheit, die die Zeitdauer zwischen zwei Umschaltvorgängen zum Neupositionieren von Anschlussstellen wiedergibt, verändert wird/ werden.

Beispielsweise wird durch eine Variation der Konzentration insbesondere der Mehrkomponentenfluidmischung, wie sie beispielsweise durch eine Zuführung der Mehrkomponentenfluidmischung mit einer fünffachen Konzentration im vierten Viertel einer Takteinheit realisiert werden kann, vorteilhaft durch einen erhöhten Mehrkomponentenfluidmischungsdurchsatz (Feeddurchsatz) eine Produktivitätssteigerung, die für die Masse der gereinigten Mehrkomponentenfluidmischung pro Zeiteinheit und des Feststoffes steht, von 33 % erreicht.

Desweiteren wird eine Senkung des spezifischen Lösemittelverbrauches, der der Menge des verbrauchten Lösemittels pro produzierter Produktmasse einer Komponente entspricht, von beispielsweise 21 % erzielt.

Die Konzentrationen der Produkte, die den abgetrennten Komponenten entsprechen, liegen beispielsweise um 25 - 39 % über den Konzentrationen der abgetrennten Komponenten bei Verwendung des herkömmlichen SMB-Verfahrens.

Für die Durchführung des SMB-Verfahrens werden die Mehrkomponentenfluidmischung und mindestens ein Lösemittel einer Mehrzahl von mindestens einen Feststoff, vorzugsweise Adsorbensmaterial enthaltenden Kammern oder Kammerabschnitten an einem ersten und zweiten Eingang zugeführt und ein Extraktstrom, der mindestens eine erste von der Mehrkomponentenfluidmischung abgetrennte Komponente enthält, sowie ein Raffinatstrom, der mindestens eine zweite von der Mehrkomponentenfluidmischung abgetrennte Komponente enthält, aus den Kammern oder Kammerabschnitten an einem ersten und zweiten Ausgang abgeleitet.

Die Kammern oder Kammerabschnitte sind einen geschlossenen Kreislauf bildend in Reihe miteinander verbunden, und die Anschlussstellen der jeweils zwischen zwei Kammern oder Kammerabschnitten des Kreislaufs angeordneten ersten und zweiten Ein- und Ausgänge werden nach Ablauf einer zyklischen Takteinheit zwischen zwei weiteren Kammern oder Kammerabschnitten des Kreislaufes neu positioniert.

Gemäß einer bevorzugten Ausführungsform sind zwischen zwei Anschlussstellen der Ein- und Ausgänge jeweils zwei Kammern (Trennsäulen) angeordnet, zwischen welchen nach Ablauf der Zeitdauer einer Takteinheit die Anschlussstellen der Ein- und Ausgänge verschoben neu positioniert werden. Hierbei wird die Verschiebung der Anschlussstelle in Richtung des Kreislaufs, der durch die Strömungsrichtung des innerhalb der miteinander verbundenen Kammern vorhandenen Fluidstroms definiert wird, durchgeführt.

US-A-5 156 736 beschreibt die Umsetzung eines kontinuierlichen chromatographischen Prozesses innerhalb eines einzelnen Bettes. Eine Veränderung der Parameter gemäß dem Gegenstand der vorliegenden Patentanmeldung während der Takteinheit wird nicht durchgeführt.

BIRESSI G ET AL: "Experimental investigation of the behavior of gas phase simulated moving beds" JORUNAL OF CHROMATOGRAPHY A, ELSEVIER SCIENCE, NL, Bd. 957, Nr. 2, 31. Mai 2002 (2002-05-31) zeigt die Temperatur- und Druckabhängigkeit von Adsorptionsisothermen. Es werden lediglich optimale Werte für Temperatur und Druck in den unterschiedlichen Zonen des Apparates eingestellt, welche dann beim Betrieb konstant gehalten werden. Im Gegensatz dazu beruht der Gegenstand der vorliegenden Erfindung darauf, ebenjene Werte während des Betriebes, d. h. innerhalb eines jeden Taktes zu variieren/zu verändern im Sinne von hoch-tief-hoch-tief- usw.. Dies wird entweder stetig beispielsweise gemäß einer Sinusschwingung oder stufenweise durchgeführt.

MAZZOTTI M ET AL: "Optimal operation of simulated moving bed units for nonlinear chromatorgraphic separations" JOURNAL OF CHROMATOGRAPHY A, ELSEVIER SCIENCE, NL, Bd. 769, Nr. 1, 2. Mai 1997 (1997-05-02) betrifft die Abhängigkeit der Produktivität einer kontinuierlichen chromatographischen Trennung von der Konzentration des zugeführten Feeds (und einer sogenannten Langmuir-Adsorptionsisotherme, mit höheren Werten dieser Konzentration ansteigen). Dies bezieht sich allerdings wiederum lediglich auf den Fall, dass die genannte Konzentration während des Betriebes konstant gehalten wird. Dies bedeutet, dass ein entsprechender Prozess mit einer niedrigen, konstant gehaltenen Feedkonzentration eine geringere Produktivität leistet als ein solcher mit einer höheren konstant gehaltenen Feedkonzentration. Demgegenüber wird bei dem Gegenstand der vorliegenden Erfindung eine Variation während des Betriebes durchgeführt.

Die Zeitdauer der Takteinheit liegt für eine Optimierung der Regeneration des Feststoffes, welcher in den Kammern angeordnet ist, vorzugsweise in einem Bereich von 1 - 10min, beispielsweise bei 3,17 min. Auf diese Weise wird dem Fluidstrom ermöglicht, sich mit einem Volumenstrom von vorzugsweise 60 ml/min innerhalb des Kreislaufes zu bewegen. Zudem ist die Zeitdauer der Takteinheit ausreichend lange, um eine Regeneration des Feststoffes und des Lösemittels zu ermöglichen.

Die Mehrkomponentenfluidmischung, das Lösemittel, der Extraktstrom und der Raffinatstrom werden vorzugsweise derart zu- bzw. abgeführt, dass sich in den Kammern oder Kammerabschnitten - bedingt durch einen maximal zulässigen Druckverlust innerhalb der Vorrichtung - ein maximaler Fluidvolumenstrom von 60 ml/min einstellt, wobei die Mehrkomponentenfluidmischung - bedingt durch die funktionsbedingte Genauigkeit einer Pumpe für die zugeführten Ströme - mit einem Volumenstrom von mindestens 5 ml/min zugeführt wird. Auf diese Weise ist das SMB-Verfahren bei einer Anwendung einer sich innerhalb einer Takteinheit verändernden Konzentration der Mehrkomponentenfluidmischung optimal hinsichtlich des zu erreichenden Durchsatzes an zu trennenden Komponenten und des spezifischen Lösemittelverbrauchs einzustellen.

Jede Takteinheit wird beispielsweise in vier gleichgroße Taktabschnitte unterteilt. In den ersten drei Taktabschnitten wird an der Anschlussstelle des Eingangs der Mehrkomponentenfluidmischung reines Lösemittel zugeführt, wohingegen im letzten Taktabschnitt der Takteinheit eine vierfache Konzentration von beispielsweise 5 Vol% der Mehrkomponentenfluidmischung gegenüber dem konventionellen Verfahren mit zeitlich konstanten Konzentrationen von beispielsweise 1,25 Vol% während einer Takteinheit zugeführt wird. Bei gleichem Volumenstrom wird somit die gleiche Menge der Multikomponentenfluidmischung verarbeitet.

Aufgrund der sich verändernden Konzentrationen der zugeführten Ströme während einer Takteinheit wird gegenüber dem herkömmlichen SMB-Verfahren mit zeitlich konstanten Volumenströmen eine Steigerung der Produktreinheit erreicht.

In einem weiteren Schritt ist das erfindungsgemäße Verfahren hinsichtlich der Produktivität und des Lösemittelverbrauchs unter Einhaltung vorgegebener Produktspezifikationen, wie beispielsweise eine geforderte Reinheit von 98%, optimiert. Hierfür werden zum einen die Volumenströme optimal eingestellt und zum anderen die Konzentrationen der zugeführten Volumenströme im vierten Taktabschnitt erhöht. Auf diese Weise wird eine erhebliche Produktivitätssteigerung, eine deutliche Reduzierung des spezifischen Lösemittelverbrauchs und eine Erhöhung der Produktkonzentration gegenüber dem herkömmlichen Verfahren erzielt.

Die erste und zweite abgetrennte Komponente weisen jeweils eine Produktivität von vorzugsweise $7,6 \cdot 10^{-4}$ ml/min $cm^3$ auf, die die durch das herkömmliche SMB-Verfahren erreichte Produktivität um 33% übersteigt.

Der spezifische Verbrauch des Lösemittels zum Abtrennen der ersten und zweiten Komponente liegt bei 320 ml/ml gegenüber dem mit dem herkömmlichen SMB-Verfahren erforderlichen Verbrauch von ca. 400 ml/ml.

Die vorliegende Erfindung kann als eine neue Betriebsweise für jede herkömmliche das SMB-Verfahren nutzende Vorrichtung verwendet werden. Denn zur Einstellung eines Mehrkomponentenfluidmischungsgradienten sind einfache Ventilschaltungen oder herkömmliche Gradientenmischeinrichtungen verwendbar, die automatisch die gewünschte Modulation der Mehrkomponentenfluidmischungskonzentration realisieren. Demgegenüber sind bei asynchronen Schalteinrichtungen gemäß dem VARICOL-Verfahren komplizierte Ventilsteuerungsalgorithmen notwendig. Zudem werden im Gegensatz zu Verfahren mit variierenden Volumenströmen in der Vorrichtung verwendete Pumpen mit keiner wechselnden Beanspruchung betrieben. Die Pumpen sind somit weniger störanfällig.

Weitere vorteilhafte Ausführungsformen ergeben sich aus den Unteransprüchen. Insbesondere ist es vorteilhaft, wenn in dem erfindungsgemäßen Verfahren ein Druck der zugeführten Mehrkomponentenfluidmischung (2a) und/ oder des Lösemittels (3a) innerhalb einer Takteinheit stufenweise und/ oder kontinuierlich verändert wird. Zudem ist es in einem derartigen Verfahren möglich, eine Temperatur der zugeführten Mehrkomponentenfluidmischung (2a) und/ oder des Lösemittels (3a) innerhalb einer Takteinheit stufenweise und/oder kontinuierlich zu verändern. Natürlich kann in diesem Verfahren die Konzentration der Mehrkomponentenfluidmischung und/ oder der Zusammensetzung des Lösemittels stufenweise und/ oder kontinuierlich verändert werden. Des Weiteren ist es laut dem erfindungsgemäßen Verfahren möglich, mindestens einen Volumenstrom der Mehrkomponentenfluidmischung (2a), des Lösemittels (3a), des Extraktstromes (6a), des Raffinatstromes (7a) und kreislaufinterner Zirkulationsströme innerhalb einer Takteinheit stufenweise und/oder kontinuierlich zu verändern.

Weitere Vorteile und Zweckmäßigkeiten sind der nachfolgenden Beschreibung in Verbindung mit der Zeichnung zu entnehmen. Hierbei zeigen:

Fig. 1     eine schematische Darstellung einer Vorrichtung zur Durchführung eines Verfahrens zur chromatographischen Trennung von Komponenten gemäß dem aus dem Stand der Technik bekannten Batch-Verfahren;

Fig. 2     in schematischer Darstellung eine zur Durchführung eines Verfahrens zur chromatographischen Trennung von Komponenten verwendeten Vorrichtung gemäß dem aus dem Stand der Technik bekannten kontinuierlichen chromatographischen Verfahren;

Fig. 3     in schematischer Darstellung eine zur Durchführung eines Verfahrens zur chromatographischen Trennung von Komponenten geeigneten Vorrichtung gemäß dem aus dem Stand der Technik bekannten TMB-Verfahren;

Fig. 4     in schematischer Darstellung eine zur Durchführung des erfindungsgemäßen Verfahrens geeignete Vorrichtung gemäß einer Ausführungsform der Erfindung;

Fig. 5     in einem Diagramm Konzentrationsprofile der Komponenten innerhalb einer das SMB-Verfahren nutzenden Anlage gemäß einem herkömmlichen SMB-Verfahren;

Fig. 6     die Konzentrationsprofile der Komponenten innerhalb der das SMB-Verfahren nutzenden Anlage nach dem erfindungsgemäßen Verfahren, und

Fig. 7     die Konzentrationsprofile der Komponenten innerhalb der das SMB-Verfahren nutzenden Anlage nach einer Ausführungsform des erfindungsgemäßen Verfahrens.

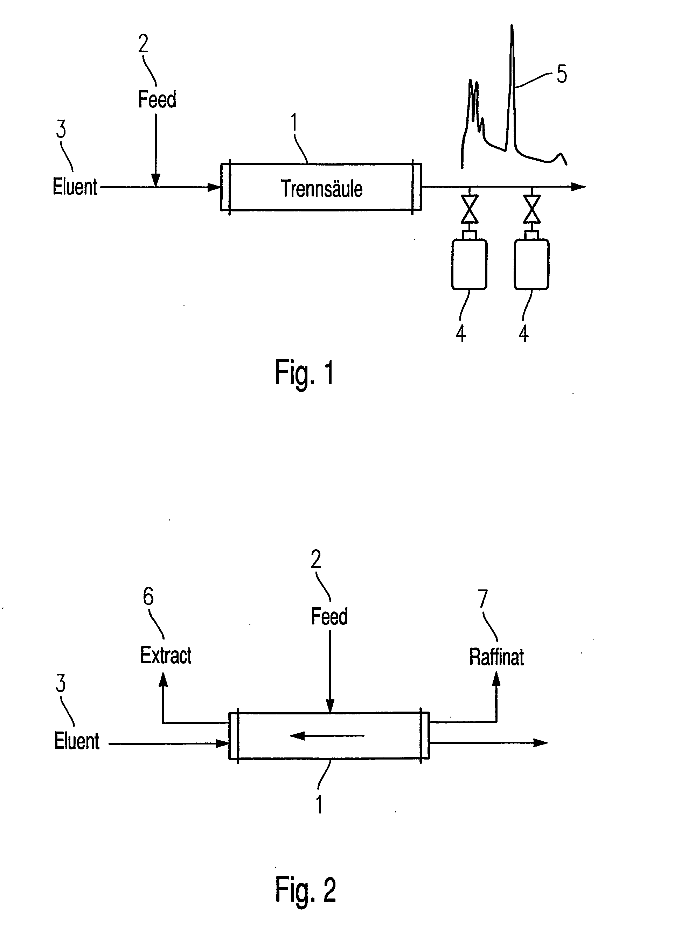

Figur 1 zeigt in einer schematischen Darstellung eine zur Durchführung eines Batch-Verfahrens geeignete Vorrichtung (Anlage). Hierbei wird eine mit einem Feststoff gefüllte Trennsäule 1 von einer Mehrkomponentenfluidmischung (Feed) 2, die in begrenzter Menge von Zeit zu Zeit einem Lösemittel (Eluent) 3 injiziert wird, der Trennsäule zugeführt. Die aufzutrennenden Komponenten, welche innerhalb der Mehrkomponentenfluidmischung 2 enthalten sind, bewegen sich mit dem Lösemittelstrom durch die Trennsäule 1 und werden aufgrund unterschiedlicher Affinität, die sie gegenüber dem Feststoff aufweisen, eine unterschiedlich starke Wechselwirkung mit dem Feststoff ausüben. Hierdurch entstehen unterschiedlich hohe Wanderungsgeschwindigkeiten der aufzutrennenden Komponenten, wodurch die Komponenten die Säule zeitlich getrennt verlassen und sich in dafür vorgesehenen Behältern 4 getrennt ansammeln. Ein für das Batch-Verfahren repräsentatives Konzentrationsprofil 5 der ersten und zweiten Komponente ist in Figur 1 andeutungsweise wiedergegeben.

Figur 2 zeigt in einer schematischen stark vereinfachten Ansicht eine für ein kontinuierliches chromatographisches Trennverfahren geeignete Vorrichtung, die sich wiederum aus einer Trennsäule 1, einer zugeführten Mehrkomponentenfluidmischung 2 und einem zugeführten Lösemittel 3 zusammensetzt. Um einen kontinuierlichen Betrieb der Anlage (Vorrichtung) zu erhalten, werden eine mobile Phase bestehend aus Mehrkomponentenfluidmischung und Lösemittel und die feste Phase (vorzugsweise Adsorbensmaterial) im Gegenstrom geführt.

Die Mehrkomponentenfluidmischung 2 wird kontinuierlich der Trennsäule 1 mittig zugeführt. Bei geeigneter Einstellung der Feststoff- und Lösemittelströme bewegen sich stärker adsorbierte Komponenten mit der festen Phase in Richtung eines abgeleiteten Extraktstromes 6 und schwächer adsorbierte Komponenten mit dem Eluentstrom 3 in Richtung eines abgeleiteten Raffinatstromes 7.

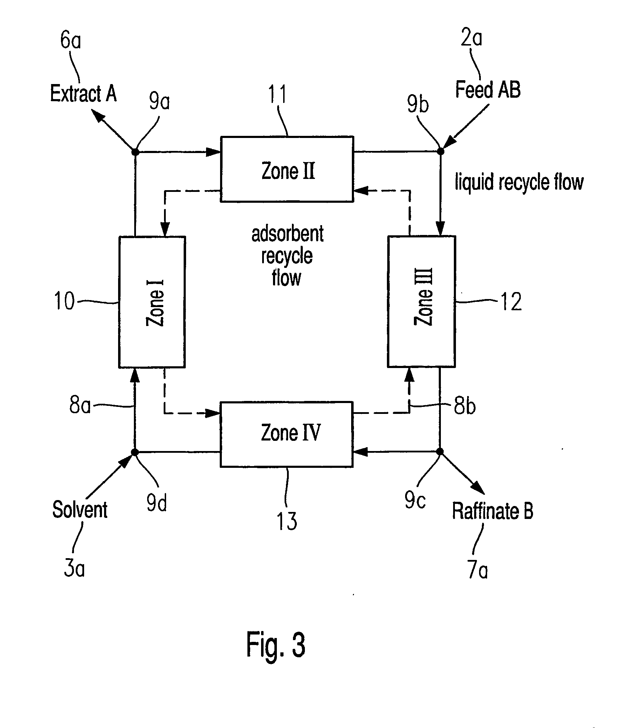

Um mittels eines Kreislaufes eine Erhöhung eines die Trennsäulen durchlaufenden Durchsatzes der Komponenten zu erreichen, werden gemäß dem Stand der Technik nach dem TMB-Verfahren vier miteinander verbundene Trennzonen 10, 11, 12 und 13 reihenartig miteinander verbunden (Figur 3). Zwischen den Trennzonen 10, 11, 12 und 13 sind Anschlussstellen für Eingänge 9b und 9d zum Zuführen der Mehrkomponentenfluidmischung 2a und des Lösemittels 3a angeordnet. An zwei weiteren Anschlussstellen zwischen den Trennzonen 10, 11, 12 und 13 sind zwei Ausgänge 9a und 9c zum Ableiten des Extraktstromes 6a und des Raffinatstromes 7a vorhanden.

In jeder der Trennzonen 10, 11, 12 und 13 besteht ein Gegenstromverhältnis zwischen der festen und fluiden Phase. Bei geeigneter Einstellung der Stromverhältnisse der festen zu der flüssigen Phase werden stärker mit dem Feststoff wechselwirkende Komponenten A mit dem Extraktstrom 6a über den Ausgang 9a abgeführt. Schwächer wechselwirkende Komponenten B werden mittels des Raffinatstromes 7a über den Ausgang 9c abgeführt.

Die Trennung der Komponenten A und B findet weitestgehend in den Trennzonen 11 und 12 statt, wohingegen die Trennzonen 10 und 13 zur Regeneration des Feststoffes, der beispielsweise ein Adsorbensmaterials sein kann, und des Lösemittels dienen. Durch die miteinander verbundenen Trennzonen 10 -13 wird ein rechtszirkulierender Kreislauf 8a und ein linkszirkulierender Kreislauf 8b erzeugt.

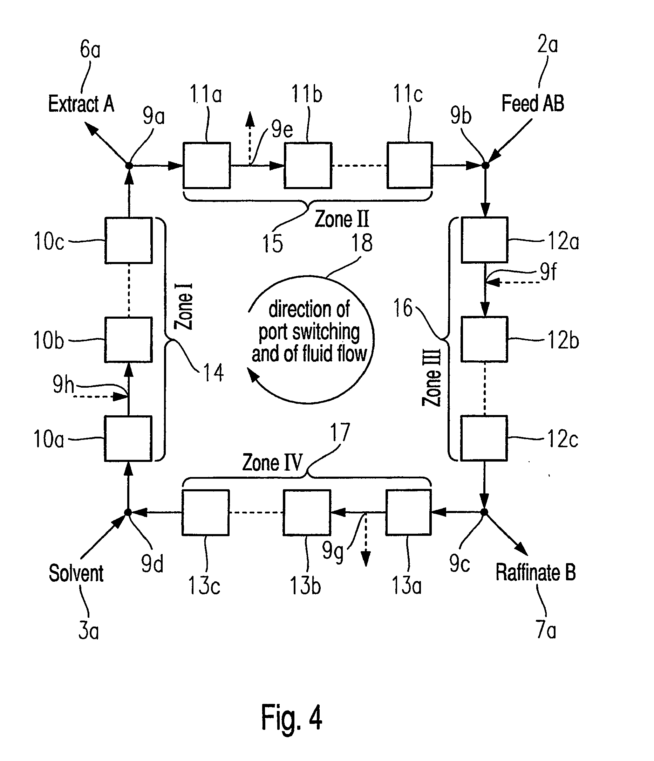

Aufgrund technischer Probleme bei der Bewegung des Feststoffes innerhalb der Trennzonen einer Anlage, die das TMB-Verfahren nutzt, wird eine in Figur 4 gezeigte Anlage zur Durchführung eines SMB-Verfahrens (Simulated Moving Bed-Verfahren) verwendet. Bei einer derartigen Vorrichtung (Anlage) ist eine Mehrzahl von chromatographischen Trennsäulen 10a - 10c, 11 a -11 c, 12a - 12c, 13a -13c mit stationärem Feststoff ringförmig miteinander verbunden. Die Trennsäulen 10a - 10c bilden eine erste Trennzone 14, die Trennsäulen 11a - 11c bilden eine zweite Trennzone 15, die Trennsäulen 12a -12c bilden eine dritte Trennzone 16, und die Trennsäulen 13a -13c bilden eine vierte Trennzone 17.

Eine Bewegung des Feststoffes wird durch zyklisches Umschalten der Eingänge 9a, 9c und Ausgänge 9b, 9d mittels einer Verschiebung in Richtung eines einen Kreislauf 18 bildenden Fluidstromes um jeweils eine Trennsäule simuliert. Die Zeit zwischen zwei aufeinanderfolgenden Umschaltvorgängen wird als Takteinheit bezeichnet. Hierbei kann das SMB-Verfahren als praktische Realisierung des TMB-Verfahrens verstanden werden. Demzufolge ist das TMB-Verfahren als vereinfachtes Modell des SMB-Verfahrens zu verstehen.

Durch die Umschaltvorgänge wird bei dem SMB-Verfahren kein rein stationärer, sondern ein zyklisch stationärer Zustand erreicht. Die Produktkonzentrationen und inneren Zustände sind zyklisch.

Herkömmlicherweise werden bei dem SMB-Verfahren konstante Betriebsparameter, wie die Volumenströme der zu- und abgeführten Ströme, die Schaltzeiten und Konzentrationen der zugeführten Ströme, verwendet. Entgegen der bisherigen Forschung im Bereich der SMB-Verfahren haben die Erfinder eine Effektivitätssteigerung der ein SMB-Verfahren nutzenden Anlage durch das Verändern der Konzentration der Mehrkomponentenfluidmischung (Feedkonzentration) innerhalb einer Takteinheit festgestellt.

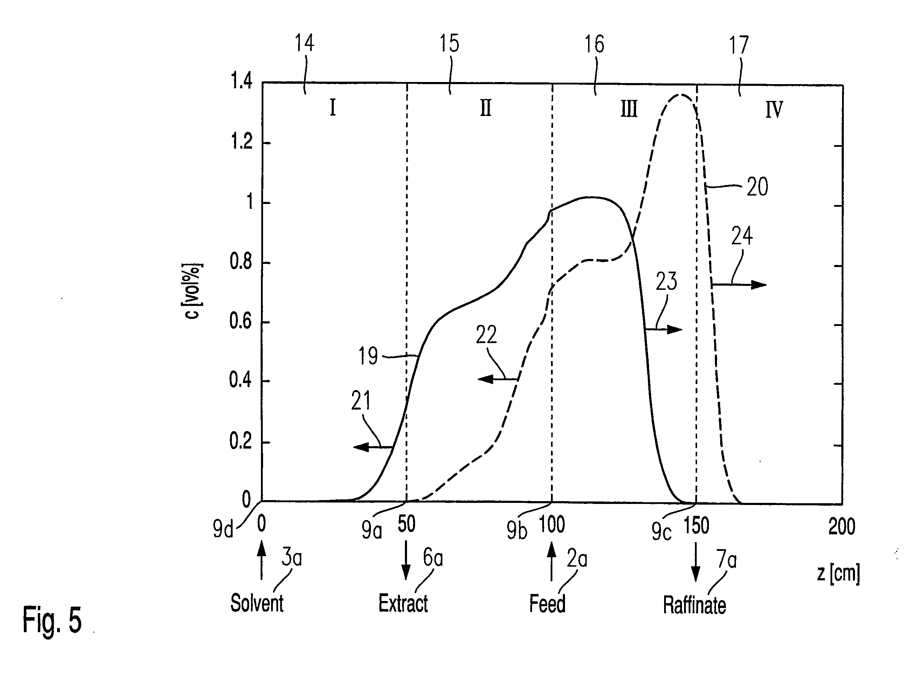

In Figur 5 werden Konzentrationsprofile der Konzentrationen von zu trennenden Komponenten innerhalb der das SMB-Verfahren mit konstanten Betriebsparametern nutzenden Anlage gezeigt. Die zu trennenden Komponenten können beispielsweise zwei Cycloketone, die in der Mehrkomponentenfluidmischung 2a in einer hohen Konzentration oder sogar in ungelöster Form vorliegen und vor der Anwendung des SMB-Verfahens auf eine bestimmte Konzentration verdünnt bzw. gelöst werden, sein. Die Komponenten liegen beispielsweise in gleicher Konzentration vor.

Die in der Figur 5 gezeigten Konzentrationsprofile 19, 20, werden bezogen auf die Mitte einer Schalttakteinheit innerhalb der gesamten Anlage, die hier beispielsweise eine Länge von 200 cm besitzt, betrachtet. Die Anlage wird mit konstanten Betriebsparametern, also mit einem konstanten Volumenstrom und synchronen Schalttaktzeiten betrieben.

Ein maximaler Fluidstrom innerhalb des Kreislaufs 18 der Anlage ist im Bereich der Trennzone 14 unter Berücksichtigung des maximalen zulässigen Druckverlustes beispielsweise 60 ml/min.

Der minimale Volumenstrom der zugeführten Mehrkomponentenfluidmischung beträgt hier 5 ml/min. Geringere Volumenströme sind aufgrund der Genauigkeit der Mehrkomponentenfluidmischungspumpe nicht einstellbar.

Integral gemittelte Komponentenreinheiten innerhalb des Extrakt- und Raffinatstroms sollen hier 98 % betragen.

Die Fluidströme innerhalb der Trennzonen 14 und 17 sind mit Sicherheitsfaktoren von 10 % beaufschlagt, um die vollständige Regeneration des Feststoffes und des Lösemittels sicherzustellen.

Aus den obengenannten Angaben ergibt sich aus Simulationsrechnungen für das herkömmliche Verfahren eine konstante Konzentration der Mehrkomponentenfluidmischung von maximal 1,25 Vol % für beide zu trennende Komponenten. Bei einer den Wert 1,25 Vol % übersteigenden Konzentration der Mehrkomponentenfluidmischung sind Produktreinheiten von 98 % unter Beachtung des minimalen Zulaufstromes der Mehrkomponentenfluidmischung nicht mehr einstellbar.

Zur Simulation der Anlage wurde das sogenannte Gleichgewicht-Dispersionsmodell verwendet:

$$\frac{\partial c_i}{\partial t} + \frac{1-\epsilon}{\epsilon} \cdot \frac{\partial q_i(c_j)}{\partial t} + u \cdot \frac{\partial c_i}{\partial z} = D_{ap} \cdot \frac{\partial^2 c_i}{\partial z^2}$$

wobei c und q die Konzentrationen in der Flüssig- bzw. Feststoff-Phase darstellen. $D_{ap}$ ist der Dispersionskoeffizient, in dem alle peakverbreitenden Effekte zusammengefasst sind. $\varepsilon$ ist die Porosität der Trennsäule, und u ist die lineare Geschwindigkeit des Lösemittels. Die Konzentrationen c und q sind durch die Adsorptionsisotherme verkoppelt. Im betrachteten Fall ist dies eine Multi - Langmuir - Isotherme:

$$q_i(c_j) = \frac{H_i \cdot c_i}{1 + \sum_j b_j \cdot c_j}.$$

Hierdurch wird das Ausbreitungsverhalten der Komponenten in der Anlage bestimmt.

Wie den in Figur 5 dargestellten Konzentrationsprofilen 19 und 20 zu entnehmen ist, bewegen sich die Komponentenkonzentrationen als wandernde Fronten durch die Anlage. Jede dieser Fronten besitzt innerhalb einer Trennzone 14 - 17 eine konstante Wanderungsgeschwindigkeit. Die innerhalb der Zonen 16 und 17 verlaufenden Fronten sind nach dem Langmuir-Verhalten sogenannte Schockwellen, und die innerhalb der Zonen 14 und 15 verlaufenden Fronten werden expansive Wellen genannt. Wenn andere Isothermen vorliegen, kann sich die Anordnung der Schockwellen und der expansiven Wellen entsprechend verändern.

Die Wanderung der Fronten wird durch die Pfeile 21, 22, 23 und 24 angedeutet.

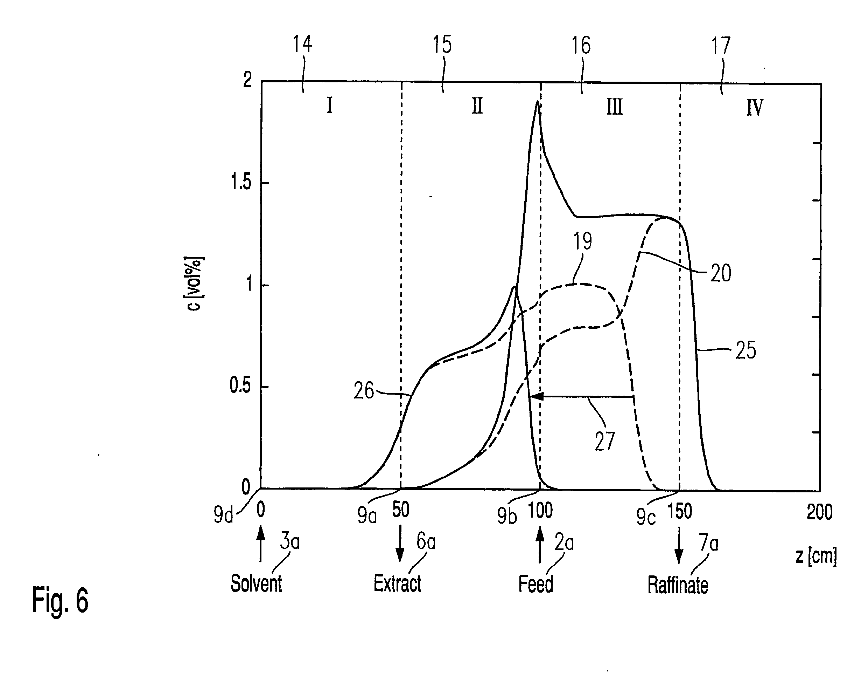

Figur 6 zeigt Konzentrationsprofile der Komponenten innerhalb einer das SMB-Verfahren nutzenden Anlage nach einer Ausführungsform der Erfindung. Hierbei wird die Konzentration der zugeführten Mehrkomponentenfluidmischung nicht konstant gehalten, sondern innerhalb einer Takteinheit verändert (Feedkonzentrationsgradient).

Eine Takteinheit kann beispielsweise in vier gleich große Taktabschnitte unterteilt werden. In den ersten drei Taktabschnitten der Takteinheit wird beispielsweise reines Lösemittel 3a zugeführt, wohingegen im vierten Taktabschnitt der Takteinheit eine vierfache Konzentration der Mehrkomponentenfluidmischung gegenüber dem herkömmlichen SMB-Verfahren mit der konstanten Konzentration zugeführt wird.

Die in Figur 6 dargestellten Konzentrationsprofile 25 und 26 mit durchgezogenen Linien geben die Konzentration der Komponenten innerhalb der Anlage in der Mitte der Zeitdauer einer Takteinheit an. Die Konzentrationsprofile 19 und 20 mit gestrichelten Linien zeigen die Konzentrationen der Komponenten in dem SMB-Verfahren der herkömmlichen Art, bei dem konstante Zulaufkonzentrationen verwendet werden. In beiden Fällen werden dieselben konstanten Volumenströme für die zugeführten, abgeleiteten und inneren Ströme verwendet.

Bei dem erfindungsgemäßen Verfahren zur chromatographischen Trennung wird das Konzentrationsprofil 26 der Komponente A nach links verschoben, wie es durch den Pfeil 27 angedeutet wird. Die Komponente A gilt als Verunreinigungskomponente des Raffinatprodukts und bewirkt durch die Linksverschiebung eine höhere Reinheit des Raffinatstromes.

Der Grund für die Verschiebung der Wellenfronten ist durch die Ausbildung verschiedener Wellenformen zu erklären.

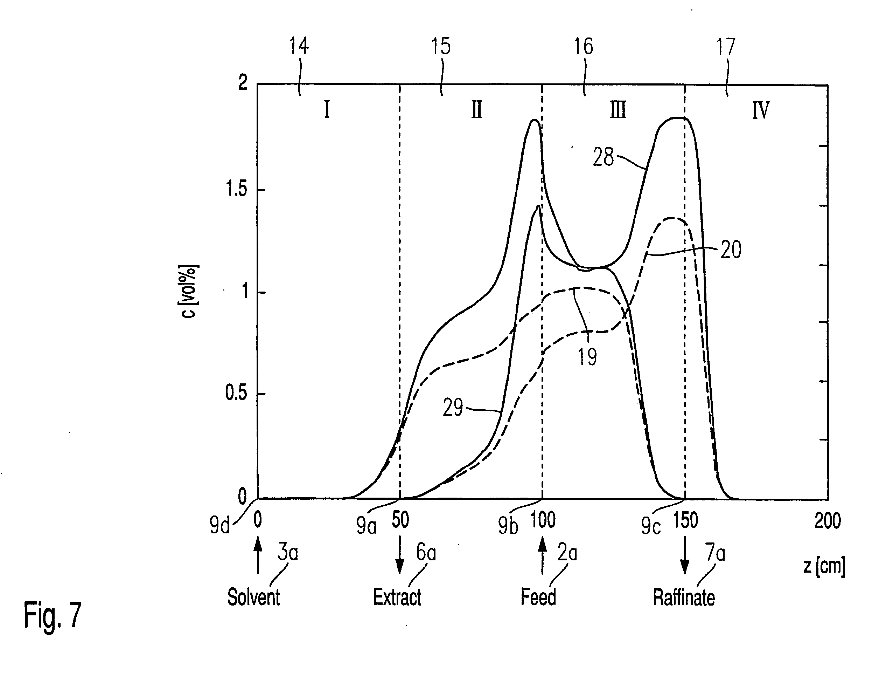

Eine weitere Optimierung des erfindungsgemäßen Verfahrens zur Trennung der Komponenten kann durch die Rückverschiebung der Fronten bei einer Variation der Feedzusammensetzung erreicht werden. Hierbei wird die "Verunreinigungsfront" des Raffinatstromes durch eine Erhöhung des Volumenstroms des Feeds wieder nach rechts verschoben, wie es aus in Figur 7 dargestellten Konzentrationsprofilen der Komponenten innerhalb der Anlage gemäß einer Ausführungsform des erfindungsgemäßen Verfahrens hervorgeht. Die geforderte Reinheit des Raffinatstromes von 98% wird durch die Erhöhung des Volumenstromes des Feeds erreicht. Die Rechtsverschiebung des Konzentrationsprofils 29 ist durch ein Vergleichen der in Figur 6 und 7 wiedergegebenen Konzentrationsprofile 26 und 29 zu erkennen.

Weiterhin kann das erfindungsgemäße Verfahren mit der Maßgabe eines minimalen Feedvolumenstromes von 5 ml/min optimiert werden, indem die Konzentration des Feeds im letzten Viertel einer Takteinheit erhöht wird. Sich daraus ergebende Konzentrationsprofile 28 und 29 sind in Figur 7 mit durchgezogener Linie dargestellt. Demgegenüber sind die Konzentrationsprofile 19 und 20, wie sie bei der Anwendung eines SMB-Verfahrens in herkömmlicher Betriebsweise entstehen, mit gestrichelter Linie wiedergegeben.

In der nachfolgenden Tabelle 1 sind die in der Simulationsstudie verwendeten Parameter für ein Verfahren zur chromatographischen Trennung von Komponenten gemäß dem SMB-Verfahren für eine konventionelle Betriebsweise mit konstanten Betriebsparametern, für die Verwendung eines Feedkonzentrationsgradienten mit identischen Volumenströmen, die auch bei dem Verfahren gemäß der konventionellen Betriebsweise verwendet werden, und für die Verwendung eines Feedkonzentrationsgradienten mit optimierten Betriebsparametern bezüglich der Volumenströme und Konzentrationen der zugeführten Volumenströme gezeigt.

Tabelle 1: In der Simulationsstudie verwendete Parameter

| | konventionelle Auslegung | a) Feedkonzentrationsgradient, gleiche Ströme | b) Feedkonzentrationsgradient, optimiert |
|---|---|---|---|
| Säulenanzahl | | 8 | |
| Säulenanordnung | | 2/2/2/2 | |
| totale Porosität der Säulen ε | | 0,83 | |
| Säulenlänge | | 25 cm | |
| Dispersionskoeffizient (u=Fluidgeschwindigkeit) | | $D_{ap}$ $[cm^2/min] = 0,25 \cdot u$ | |
| Langmuir-Parameter | | $H_1 = 8,52$; $b_1 = 0,295$ $vol\%^{-1}$ $H_2 = 5,97$; $b_2 = 0,154$ $vol\%^{-1}$ | |
| Taktzeit | | 3,17 min | |
| Volumenstrom in Zone I | | 60 ml/min | |
| Extraktstrom [ml/min] | | 19,14 | 20,50 |
| Raffinatstrom [ml/min] | | 5,93 | 5,60 |
| Feedstrom [ml/min] | | 5,01 | 5,01 |
| Eluentstrom [ml/min] | | 20,06 | 21,09 |
| [Feedkonzentration [vol%] | 1,25 = const. | 0/0/0/5 | 0/0/0/6,6 |

Tabelle 1 ist zu entnehmen, dass die Zeitdauer für eine Takteinheit 3,17 min und der Volumenstrom des Fluidstromes innerhalb der Zone I (Trennzone 14) 60 ml/min beträgt.

Durch eine optimale Einstellung der Volumenströme des Extraktstromes, des Raffinatstromes, des Feedstromes und des,Eluentenstromes und eine Erhöhung der Konzentration des zugeführten Feeds im vierten Taktabschnitt auf 6,6 Vol % wird ein verbessertes Verfahren zur chromatographischen Trennung von Komponenten unter Verwendung eines Feedkonzentrationsgradienten erhalten (Feedkonzentrationsgradient, optimiert).

In einer nachfolgend dargestellten Tabelle 2 sind Leistungskennzahlen der Verfahren mit einer konventionellen Betriebsweise mit optimierten Volumenströmen, der Verwendung eines Feedkonzentrationsgradienten mit Volumenströmen, die identisch mit denjenigen der konventionellen Betriebsweise sind, und für die Verwendung eines optimierten Feedkonzentrationsgradienten mit optimierten konstanten Volumenströmen wiedergegeben.

Tabelle 2: Vergleich der Leistungsparameter

| | | konventionelle Auslegung | a) Feedkonzentrationsgradient, gleiche Ströme | b) Feedkonzentrationsgradient, optimiert | Unterschied von Unterschied von b) zur konventionellen Auslegung |
|---|---|---|---|---|---|
| $\bar{c}_i^k$ | Ex | 0,32 | 0,33 | 0,40 | +25 % |
| [vol%] | Ra | 1,04 | 1,04 | 1,45 | +39 % |
| $\dot{m}_i^k$ | Ex | 0,061 | 0,063 | 0,081 | +33 % |
| [ml/min] | Ra | 0,061 | 0,063 | 0,081 | |
| $PUR_i^k$ | Ex | 98,0 | 98,1 | 98,0 | |
| [%] | Ra | 98,0 | 100,0 | 98,0 | |
| $PR_i^k$ | Ex | $5{,}7 \cdot 10^{-4}$ | $5{,}9 \cdot 10^{-4}$ | $7{,}6 \cdot 10^{-4}$ | +33 % |
| $\left[\frac{ml}{min \cdot cm^3}\right]$ | | $5{,}7 \cdot 10^{-4}$ | $5{,}8 \cdot 10^{-4}$ | $7{,}6 \cdot 10^{-4}$ | |
| $EC_i^k$ | Ex | 406 | 398 | 320 | -21% |
| [ml/ml] | Ra | 406 | 406 | 320 | |

In Tabelle 2 ist vergleichsweise die mittlere Produktkonzentration $c_i^{-k}$, ein Produktmengenstrom $m_i^k$, eine Produktreinheit $PUR_i^k$, eine Produktivität $PR_i^k$ und ein spezifischer Lösemittelverbrauch $EC_i^k$ wiedergegeben. Die Indices i und k beziehen sich jeweils auf die Komponenten A innerhalb des Extraktstromes und B innerhalb des Raffinatstromes (i = Komponente, k = Ex, Ra)

Durch den höheren Feeddurchsatz mit einer Feedkonzentration von 6,6 Vol % im letzten Taktabschnitt jeder Takteinheit gegenüber einer konstanten Feedkonzentration von 1,25 Vol % wird beim optimierten Verfahren gegenüber dem herkömmlichen Verfahren eine Produktivitätssteigerung, die für die Masse des aufgereinigten Gemisches pro Zeit und Adsorbensvolumen steht, von 33 % erreicht. Desweiteren wird eine Senkung des spezifi-schen Lösemittelverbrauchs, also die Menge des verbrauchten Lösemittels pro produzierter Produktmenge einer Komponente, von 21 % erzielt. Die Produktkonzentrationen liegen bei 25 bzw. 39 % über den Konzentrationen des herkömmlichen Verfahrens.

Bei dem erfindungsgemäßen Verfahren handelt es sich um eine gezielte Ausnutzung der Nichtlinearität des thermodynamischen Gleichgewichts. Daher ist seine Anwendung nicht auf das hier benutzte Beispiel des Vorliegens der Langmuir-Adsorptionsisotherme beschränkt. Vielmehr existiert für jede nichtlineare Isotherme ein Feedkonzentrationsprofil, welches die Optimierung des Verfahrens gegenüber der konventionellen Betriebsweise erlaubt. So ist beispielsweise zur Optimierung im Fall von Isothermen des sogenannten Anti-Langmuir-Typs die Feedkonzentration zu Beginn der Takteinheit zu erhöhen und gegen Ende der Takteinheit zu senken. Desweiteren ist die Anwendung des erfindungsgemäßen Verfahrens in anderen SMB-Prozeßvarianten, wie z. B. unter Verwendung von gasförmigen oder überkritischen mobilen Phasen, bei SMB-Trennverfahren mit integrierter chemischer Reaktion oder in von der klassischen Vier-Zonen-Konfiguration abweichenden SMB-Verfahren (z. B. Anlagen zur Trennung von mehr als 2 Komponenten) möglich.

Zudem ist das erfindungsgemäße Verfahren allgemein auch für andere mehrphasige Stofftrennprozesse mit zyklischem Charakter und nichtlinearem Phasengleichgewicht anwendbar.

**Bezugszeichenliste**

| | |
|---|---|
| 1 | Trennsäule |
| 2, 2a | Mehrkomponentenfluidmischung |
| 3, 3a | Lösemittel |
| 4 | Behälter |
| 5 | Konzentrationsprofile |
| 6, 6a | Extraktstrom |
| 7, 7a | Raffinatstrom |
| 8a, 8b, 18 | Kreisläufe |
| 9a, 9b, 9c, 9d | Ein und Ausgänge |
| 10, 11, 12, 13 | Trennzonen |
| 10a, 10b, 10c; | |
| 11a, 11b, 11c; | |
| 12a, 12b, 12c; | |
| 13a, 13b, 13c | Kammern, Trennsäulen |
| 14, 15, 16, 17 | Trennzonen |
| 19, 20, 25, 26, 28, 29 | Konzentrationsprofile |
| 21, 22, 23, 24 | Richtung der wandernden Wellen |
| 27 | Verschiebungsrichtung |

**Patentansprüche**

1. Verfahren zur chromatographischen Trennung von Komponenten (19, 20, 25, 26, 28, 29) einer Mehrkomponentenfluidmischung (2a) mittels des Simulated Moving Bed-Verfahrens, wobei
die Mehrkomponentenfluidmischung (2a) und mindestens ein Lösemittel (3a) einer Mehrzahl von mindestens einen Feststoff enthaltenden Kammern (10a - 10c; 11a - 11c; 12a - 12c; 13a - 13c) oder Kammerabschnitten an einem ersten und zweiten Eingang (9b, 9d; 9f, 9h) zugeführt werden, und
ein Extraktstrom (6a), der mindestens eine erste von der Mehrkomponentenfluidmischung (2a) abgetrennte Komponente (19, 26, 29) enthält, sowie ein Raffinatstrom (7a), der mindestens eine zweite von der Mehrkomponentenfluidmischung (2a) abgetrennte Komponente (20, 25, 28) enthält, aus den Kammern (10a -10c; 11a - 11c; 12a - 12c; 13a - 13c) oder Kammerabschnitten an einem ersten und zweiten Ausgang (9a, 9c; 9e, 9g) abgeleitet werden, wobei

die Kammern (10a - 10c; 11a -11c; 12a - 12c; 13a - 13c) oder Kammerabschnitte einen geschlossenen Kreislauf (8a, 8b; 18) bildend in Reihe miteinander verbunden sind, und Anschlußstellen der jeweils zwischen zwei Kammern (10a, 13c; 10c, 11a; 11c, 12a; 12c, 13a) oder Kammerabschnitten des Kreislaufs (8a, 8b; 18) angeordneten ersten und zweiten Ein- und Ausgänge (9a - 9d; 9e - 9h) nach Ablauf einer zyklischen Takteinheit zwischen zwei weiteren Kammern (10a, 10b; 11a, 11b; 12a, 12b; 13a, 13b) oder Kammerabschnitten des Kreislaufs neu positioniert werden, **dadurch gekennzeichnet, dass**

die Konzentration der zugeführten Mehrkomponentenfluidmischung (2a) und/oder eine Zusammensetzung des Lösemittels (3a) innerhalb der Takteinheit verändert werden/wird.

2. Verfahren nach Anspruch 1,
   **dadurch gekennzeichnet, dass**
   ein Druck der zugeführten Mehrkomponentenfluidmischung (2a) und/oder des Lösemittels (3a) während einer Takteinheit stufenweise und/ oder kontinuierlich verändert wird.

3. Verfahren nach Anspruch 1 oder 2,
   **dadurch gekennzeichnet, dass**
   eine Temperatur der zugeführten Mehrkomponentenfluidmischung (2a) und/oder des Lösemittels (3a) innerhalb einer Takteinheit stufenweise und/oder kontinuierlich verändert wird.

4. Verfahren nach einem der vorangegangenen Ansprüche,
   **dadurch gekennzeichnet, dass**
   die Konzentration der Mehrkomponentenfiuidmischung und/ oder der Zusammensetzung des Lösemittels stufenweise und/ oder kontinuierlich verändert wird.

5. Verfahren nach einem der vorangegangenen Ansprüche,
   **dadurch gekennzeichnet, dass**
   mindestens ein Feststoff verwendet wird, der dafür geeignet ist, in den einzelnen Kammern oder Kammerabschnitten unterschiedliche Wanderungsgeschwindigkeiten der einzelnen Komponenten der Mehrkomponentenfluidmischung hervorzurufen.

6. Verfahren nach einem der vorangegangenen Ansprüche,
   **dadurch gekennzeichnet, dass**
   der Feststoff ein Adsorbensmaterial ist.

7. Verfahren nach einem der vorangegangenen Ansprüche,
   **dadurch gekennzeichnet, dass**
   als Lösemittel (3a) eine Mischung aus einer Mehrzahl von Fluiden verwendet wird.

8. Verfahren nach einem der vorangegangenen Ansprüche,
   **dadurch gekennzeichnet, dass**
   als Lösemittel (3a) und/ oder Mehrkomponentenfluidmischung ein Gas oder eine Mischung aus einer Mehrzahl von Gasen verwendet wird, das/die im überkritischen oder unterkritischen Zustand ist/sind .

9. Verfahren nach einem der vorangegangenen Ansprüche,
   **dadurch gekennzeichnet, dass**
   das Lösemittel (3a) zu trennende Komponenten enthält.

10. Verfahren nach Anspruch 9,
    **dadurch gekennzeichnet, dass**
    das Lösemittel mit den zu trennenden Komponenten und das Lösemittel ohne die zu trennenden Komponenten verschiedene Zusammensetzungen und/oder Fähigkeiten hinsichtlich einer Beinflussung eines Bindungsverhaltens der zu trennenden Komponenten gegenüber dem Feststoff aufweisen.

11. Verfahren nach einem der vorangegangenen Ansprüche,
    **dadurch gekennzeichnet, dass**
    in den Kammern (10a - 10c; 11 a - 11 c; 12a - 12c; 13a 13c) oder Kammerabschnitten eine chemische Reaktion zur Herstellung und Trennung von den Komponenten durchgeführt wird.

**12.** Verfahren nach einem der vorangegangenen Ansprüche,
**dadurch gekennzeichnet, dass**
die Anschlussstellen der ersten und zweiten Ein- und Ausgänge (9a - 9d; 9e - 9h) zu verschiedenen Zeitpunkten neu positioniert werden.

**13.** Verfahren nach einem der vorangegangenen Ansprüche,
**dadurch gekennzeichnet, dass**
mindestens ein Volumenstrom der Mehrkomponentenfluidmischung (2a), des Lösemittels (3a), des Extraktstromes (6a), des Raffinatstromes (7a) und kreislaufinterner Zirkulationsströme innerhalb einer Takteinheit stufenweise und/ oder kontinuierlich verändert wird.

**14.** Vorrichtung zur Durchführung des Verfahrens nach einem der vorangegangenen Ansprüche, wobei die Vorrichtung einen ersten und zweiten Eingang (9b, 9d, 9f, 9h) zur Zuführung der Mehrkomponentenfluidmischung (2a) und mindestens eines Lösemittel (3a) an eine Mehrzahl von mindestens einen Feststoff enthaltenden Kammern (10a - 10c; 11a - 11c; 12a - 12c; 13a - 13c) oder Kammerabschnitten aufweist, und einen ersten und zweiten Ausgang (9a, 9c, 9e, 9g) zur Ableitung eines Extraktstromes (6a), der mindestens eine erste von der Mehrkomponentenfluidmischung (2a) abgetrennte Komponente (19, 26, 29) enthält, sowie eines Raffinatstroms (7a), der mindestens eine zweite von der Mehrkomponentenfluidmischung (2a) abgetrennte Komponente (20, 25, 28) enthält, aus den Kammern (10a -10c; 11a -11c; 12a - 12c; 13a - 13c) oder Kammerabschnitten, wobei die Kammern (10a - 10c; 11a - 11c; 12a - 12c; 13a - 13c) oder Kammerabschnitte einen geschlossenen Kreislauf (8a, 8b; 18) bildend in Reihe miteinander verbunden sind, und wobei Anschlußstellen der jeweils zwischen zwei Kammern (10a, 13c; 10c, 11a; 11c, 12a; 12c, 13a) oder Kammerabschnitten des Kreislaufs (8a, 8b; 18) angeordneten ersten und zweiten Ein- und Ausgänge (9a - 9d; 9e - 9h) geeignet sind, nach Ablauf einer zyklischen Takteinheit zwischen zwei weiteren Kammern (10a, 10b; 11a, 11b; 12a, 12b; 13a, 13b) oder Kammerabschnitten des Kreislaufs neu positioniert zu werden,
**dadurch gekennzeichnet, dass**
die Vorrichtung Ventilschaltungen oder Gradientenmischeinrichtungen zur Durchführung einer selbsttätigen Modulation der Mehrkompentenfluidmischungskonzentration und/oder der Lösemittelkonzentration während einer Takteinheit aufweist.

## Claims

**1.** Method for the chromatographic separation of components (19, 20, 25, 26, 28, 29) of a multicomponent fluid mixture (2a) by means of the Simulated Moving Bed method, wherein
the multicomponent fluid mixture (2a) and at least one solvent (3a) are supplied to a plurality of chambers (10a-10c; 11a-11c; 12a-12c; 13a-13c) or chamber sections containing at least one solid, at a first and second inlet 19b, 9d; 9f, 9h), and
an extract stream (6a), which contains at least one first component (19, 26, 29) separated from the multicomponent fluid mixture (2a), and also a raffinate stream (7a), which contains at least one second component (20, 25, 28) separated from the multicomponent fluid mixture (2a), are branched off from the chambers (10a-10c; 11a-11c; 12a-12c; 13a-13c) or chamber sections at a first and second outlet (9a, 9c; 9e, 9g), wherein
the chambers (10a-10c; 11a-11c; 12a-12c; 13a-13c) or chamber sections are connected to one another in series so as to form a closed circuit (8a, 8b; 18), and connection points of the first and second inlets and outlets (9a-9d; 9e-9h) arranged respectively between two chambers (10a, 13c; 10c, 11a; 11c, 12a; 12c, 13a) or chamber sections of the circuit (8a, 8b; 18) are repositioned between two other chambers (10a, 10b; 11a, 11b; 12a, 12b; 13a, 13b) or chamber sections of the circuit at the end of one cyclical time unit,
**characterised in that** the concentration of the supplied multicomponent fluid mixture (2a) and/or a composition of the solvent (3a) is/are changed within the time unit.

**2.** Method according to claim 1, **characterised in that** a pressure of the supplied multicomponent fluid mixture (2a) and/or of the solvent (3a) is changed in stages and/or continuously during one time unit.

**3.** Method according to claim 1 or 2, **characterised in that** a temperature of the supplied multicomponent fluid mixture (2a) and/or of the solvent (3a) is changed in stages and/or continuously within one time unit.

**4.** Method according to one of the preceding claims, **characterised in that** the concentration of the multicomponent fluid mixture and/or the composition of the solvent is changed in stages and/or continuously.

**5.** Method according to one of the preceding claims, **characterised in that** use is made of at least one solid which is suitable for bringing about different migration rates of the individual components of the multicomponent fluid mixture in the individual chambers or chamber sections.

**6.** Method according to one of the preceding claims, **characterised in that** the solid is an adsorbent material.

**7.** Method according to one of the preceding claims, **characterised in that** a mixture of a plurality of fluids is used as the solvent (3a).

**8.** Method according to one of the preceding claims, **characterised in that** a gas or a mixture of a plurality of gases which is/are in the supercritical or subcritical state is used as the solvent (3a) and/or multicomponent fluid mixture.

**9.** Method according to one of the preceding claims, **characterised in that** the solvent (3a) contains components to be separated.

**10.** Method according to claim 9, **characterised in that** the solvent containing the components to be separated and the solvent without the components to be separated exhibit different compositions and/or capabilities with regard to influencing a binding behaviour of the components to be separated relative to the solid.

**11.** Method according to one of the preceding claims, **characterised in that** a chemical reaction is carried out in the chambers (10a-10c; 11a-11c; 12a-12c; 13a-13c) or chamber sections in order to produce and separate the components.

**12.** Method according to one of the preceding claims, **characterised in that** the connection points of the first and second inlets and outlets (9a-9d; 9e-9h) are repositioned at different points in time.

**13.** Method according to one of the preceding claims, **characterised in that** at least one volume flow of the multicomponent fluid mixture (2a), of the solvent (3a), of the extract stream (6a), of the raffinate stream (7a) and of circulation streams within the circuit is changed in stages and/or continuously within one time unit.

**14.** Apparatus for carrying out the method according to one of the preceding claims, wherein the apparatus comprises a first and second inlet (9b, 9d, 9f, 9h) for supplying the multicomponent fluid mixture (2a) and at least one solvent (3a) to a plurality of chambers (10a-10c; 11a-11c; 12a-12c; 13a-13c) or chamber sections containing at least one solid, and a first and second outlet (9a, 9c, 9e, 9g) for branching off from the chambers (10a-10c; 11a-11c; 12a-12c; 13a-13c) or chamber sections an extract stream (6a), which contains at least one first component (19, 26, 29) separated from the multicomponent fluid mixture (2a), and also a raffinate stream (7a), which contains at least one second component (20, 25, 28) separated from the multicomponent fluid mixture (2a), wherein the chambers (10a-10c; 11a-11c; 12a-12c; 13a-13c) or chamber sections are connected to one another in series so as to form a closed circuit (8a, 8b, 18), and wherein connection points of the first and second inlets and outlets (9a-9d; 9e-9h) arranged respectively between two chambers (10a, 13c; 10c, 11a; 11c, 12a; 12c, 13a) or chamber sections of the circuit (8a, 8b, 18) are repositioned between two other chambers (10a, 10b; 11a, 11b; 12a, 12b; 13a, 13b) or chamber sections of the circuit at the end of one cyclical time unit, **characterised in that** the apparatus comprises valve circuits or gradient mixing devices for carrying out an automatic modulation of the multicomponent fluid mixture concentration and/or of the solvent concentration during one time unit.

**Revendications**

**1.** Procédé de séparation chromatographique de constituants (19, 20, 25, 26, 28, 29) d'un mélange fluide à plusieurs constituants (2a) par simulation de lit mobile, dans lequel
le mélange fluide à plusieurs constituants (2a) et au moins un solvant (3a) sont amenés à une pluralité de chambres (10a - 10c ; 11a - 11c ; 12a - 12c ; 13a - 13c) contenant au moins un solide, ou à des segments de chambre, à une première et une seconde entrée (9b, 9d ; 9f, 9h), et
un courant d'extrait (6a), qui contient au moins un premier constituant (19, 26, 29) séparé du mélange fluide à plusieurs constituants (2a), ainsi qu'un courant de raffinat (7a) qui contient au moins un second constituant (20, 25, 28) séparé du mélange fluide à plusieurs constituants (2a), sont dérivés des chambres (10a - 10c ; 11a - 11c ; 12a - 12c ; 13a - 13c) ou de segments de chambre, à une première et une seconde entrée (9a, 9c ; 9e, 9g), dans lequel les chambres (10a - 10c ; 11a - 11c ; 12a - 12c ; 13a - 13c) ou des segments de chambre qui forment un circuit fermé (8a, 8b ; 18) sont reliés entre eux, et des points de raccordement des premières et secondes entrées et sorties (9a - 9d ; 9e - 9h), disposées chaque fois entre deux chambres (10a, 13c ; 10c, 11a ; 11c, 12a ; 12c, 13a) ou des segments de chambre du circuit (8a, 8b ; 18), sont repositionnés, à l'expiration d'une unité de cycle, entre deux autres chambres (10a, 10b ; 11a, 11b ; 12a, 12b ; 13a, 13b) ou segments de chambre du circuit, **caractérisé en ce que** la concentration du mélange fluide à plusieurs constituants (2a) amené et/ou une composition du solvant (3a) est/sont modifiées à l'intérieur de l'unité de cycle.

2. Procédé selon la revendication 1, **caractérisé en ce qu'**une pression du mélange fluide à plusieurs constituants (2a) amené et/ou du solvant (3a) est modifiée par degrés et/ou en continu pendant une unité de cycle.

3. Procédé selon l'une quelconque des revendications 1 ou 2, **caractérisé en ce qu'**une température du mélange fluide à plusieurs constituants (2a) amené et/ou du solvant (3a) est modifiée par degrés et/ou en continu à l'intérieur d'une unité de cycle.

4. Procédé selon l'une quelconque des revendications 1 à 3, **caractérisé en ce que** la concentration du mélange fluide à plusieurs constituants et/ou de la composition du solvant est modifiée par degrés et/ou en continu.

5. Procédé selon l'une quelconque des revendications 1 à 4, **caractérisé en ce qu'**on utilise au moins un solide qui est propre à provoquer différentes vitesses de migration des différents constituants du mélange fluide à plusieurs constituants, dans les différentes chambres ou segments de chambre.

6. Procédé selon l'une quelconque des revendications 1 à 5, **caractérisé en ce que** le solide est un matériau adsorbant.

7. Procédé selon l'une quelconque des revendications 1 à 6, **caractérisé en ce que** le solvant utilisé (3a) soit un mélange d'une pluralité de fluides.

8. Procédé selon l'une quelconque des revendications 1 à 7, **caractérisé en ce que** le solvant (3a) et/ou le mélange fluide à plusieurs constituants utilisé soit un gaz ou un mélange d'une pluralité de gaz, qui est à l'état sur-critique ou sous-critique.

9. Procédé selon l'une quelconque des revendications 1 à 8, **caractérisé en ce que** le solvant (3a) contient des constituants à séparer.

10. Procédé selon la revendication 9, **caractérisé en ce que** le solvant avec les constituants à séparer et le solvant sans les constituants à séparer présentent différentes compositions et/ou capacités en ce qui concerne l'action sur un processus de liaison des constituants à séparer, par rapport au solide.

11. Procédé selon l'une quelconque des revendications 1 à 10, **caractérisé en ce qu'**une réaction chimique est conduite dans les chambres (10a - 10c ; 11a - 11c ; 12a - 12c ; 13a -13c) ou segments de chambre pour la production et la séparation des constituants.

12. Procédé selon l'une quelconque des revendications 1 à 11, **caractérisé en ce que** les points de raccordement des premières et secondes entrées et sorties (9a - 9d ; 9e - 9h) sont repositionnés à différents instants.

13. Procédé selon l'une quelconque des revendications 1 à 12, **caractérisé en ce qu'**au moins un courant volumique du mélange fluide à plusieurs constituants (2a), du solvant (3a), du courant d'extrait (6a), du courant de raffinat (7a) et des courants de circulation internes au circuit, est modifié par degrés et/ou en continu à l'intérieur d'une unité de cycle.

14. Dispositif pour la mise en oeuvre du procédé selon l'une quelconque des revendications 1 à 13, dans lequel le dispositif comporte une première et une seconde entrée (9b, 9d, 9f, 9h) pour amener le mélange fluide à plusieurs constituants (2a) et au moins un solvant (3a) à une pluralité de chambres (10a - 10c ; 11a - 11c ; 12a - 12c ; 13a - 13c) ou segments de chambre contenant au moins un solide, et une première et seconde sortie (9a, 9c, 9e, 9g) pour la dérivation d'un courant d'extrait (6a) qui contient au moins un premier constituant (19, 26, 29), séparé du mélange fluide à plusieurs constituants (2a), ainsi que d'un courant de raffinat (7a) qui contient au moins un second constituant (20, 25, 28) séparé du mélange fluide à plusieurs constituants(2a), des chambres (10a - 10c ; 11a - 11c ; 12a - 12c ; 13a - 13c) ou segments de chambre, dans lequel les chambres (10a- 10c ; 11a - 11c ; 12a - 12c ; 13a - 13c) ou segments de chambre, qui forment un circuit fermé (8a, 8b, 18), sont reliés en série entre eux, et dans lequel des points de raccordement des premières et secondes entrées et sorties (9a - 9d ; 9e - 9h) disposées chaque fois entre deux chambres (10a, 13c ; 10c, 11a ; 11c, 12a ; 12c, 13a) ou segments de chambre du circuit (8a, 8b, 18), sont propres à être repositionnés, à l'expiration d'une unité de cycle, entre deux autres chambres (10a, 10b ; 11a, 11b ; 12a, 12b ; 13a, 13b) ou segments de chambre du circuit, **caractérisé en ce que** le dispositif comporte des commandes à soupapes ou des mélangeurs de gradients pour la réalisation d'une modulation automatique de la concentration du mélange fluide à plusieurs constituants et/ou de la concentration du solvant pendant une unité de cycle.

Fig. 1

Fig. 2

Fig. 3

Fig. 4

Fig. 5

Fig. 6

EP 1 526 907 B1

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2985589 A
- US 4293346 A
- US 5122275 A
- US 5102553 A
- US 5422007 A
- US 5156736 A

### In der Beschreibung aufgeführte Nicht-Patentliteratur

- **O. LUDEMANN-HOMBOURGER ; R.M. NICOUD ; M. BAILLY.** The ''VARICOL'' Process: A New Multicolumn Continuous Chromatographic Process. *Separation Science and Technology,* 2000, vol. 35 (12), 1829-1862
- Experimental investigation of the behavior of gas phase simulated moving beds. **BIRESSI G et al.** JORUNAL OF CHROMATOGRAPHY A. ELSEVIER SCIENCE, 31. Mai 2002, vol. 957
- Optimal operation of simulated moving bed units for nonlinear chromatorgraphic separations. **MAZZOTTI M et al.** JOURNAL OF CHROMATOGRAPHY A. ELSEVIER SCIENCE, 02. Mai 1997, vol. 769